# FASCICULE DE BREVET EUROPEEN

(11) **EP 2 818 943 B1**
(45) Date de publication et mention de la délivrance du brevet: **25.04.2018**
(21) Numéro de dépôt: 13173403.0
(22) Date de dépôt: 24.06.2013
(51) Int. Cl.: G04B 47/06, G01C 5/06

(54) **Objet portable équipé d'un dispositif de mesure de la pression atmospérique**
Tragbarer Gegenstand, der mit einer Vorrichtung zum Messen des Luftdrucks ausgestattet ist
Portable object provided with a device for measuring atmospheric pressure

(43) Date de publication de la demande: 31.12.2014
(73) Titulaire: Montres Breguet SA, 1344 L'Abbaye (CH)
(72) Inventeur: Junod, Benoît, 74250 Peillonnex (FR); Sarchi, Davide, 1020 Renens (CH); Zaugg, Alain, 1347 Le Sentier (CH); Pittet, Jan, 1347 Le Sentier (CH)
(74) Mandataire: Supper, Marc

(56) Documents cités:
- WO-A1-2013/079810
- CH-A5- 693 155
- US-A1- 2004 233 788

## Description

La présente invention concerne un objet portable de petites dimensions tel qu'une montre-bracelet équipé d'un dispositif de mesure de la pression atmosphérique capable de fournir une indication de la variation de la pression atmosphérique en un lieu où se trouve l'utilisateur de l'objet portable.

Des montres-bracelets équipées d'un dispositif de mesure de la pression atmosphérique sont déjà connues. De telles montres-bracelets comprennent classiquement un capteur de pression par exemple du type anéroïde dont les dimensions géométriques varient en fonction des fluctuations de la pression atmosphérique. Dans un mode de réalisation connu, la variation des dimensions géométriques du capteur de pression sous l'effet des fluctuations de la pression atmosphérique est transformée en un déplacement linéaire d'un palpeur qui lui-même commande le pivotement d'une bascule. Le mouvement de pivotement de la bascule est à son tour transformé en un mouvement de rotation d'un train d'engrenages qui engrène avec une roue d'affichage selon un rapport d'entraînement calculé de façon qu'une aiguille d'indication de l'altitude portée par la roue d'affichage fournisse au porteur de la montre une indication d'altitude lisible.

Un dispositif de ce type est connu par exemple du document WO2013/079810.

Les constructions du genre de celle brièvement décrite ci-dessus sont typiquement utilisées pour fournir au porteur de la montre une indication de l'altitude du lieu où celui-ci se trouve. On sait en effet que la valeur de la pression atmosphérique est fonction de l'altitude du lieu où la pression atmosphérique est mesurée. On sait également que l'indication de l'altitude fournie par la montre peut être faussée en raison des variations météorologiques. Ainsi, même si le porteur de la montre ne change pas d'emplacement, il est possible que la montre fournisse une indication changeante de l'altitude de cet emplacement sous l'effet des fluctuations de la pression atmosphérique.

Il s'avère donc utile d'associer à un dispositif altimétrique un dispositif barométrique. En effet, grâce au dispositif barométrique, il est possible de fournir une indication de la variation dans le temps de la pression atmosphérique locale. Cette indication peut ensuite être utilisée soit pour corriger l'indication d'altitude, soit pour prévoir l'évolution des conditions météorologiques.

L'inconvénient d'une telle solution réside cependant dans le fait qu'il est difficilement envisageable d'intégrer dans un objet portable de petites dimensions tel qu'une montre bracelet un dispositif altimétrique doublé d'un dispositif barométrique.

Le document US2004/0233788 décrit un dispositif d'affichage de la tendance barométrique utilisant un capteur électronique et une connexion électrique pour activer l'affichage de des données barométriques. La présente invention a pour but de pallier cet inconvénient ainsi que d'autres encore en procurant un objet portable de faibles dimensions tel qu'une montre-bracelet équipé d'un dispositif barométrique capable de fournir une indication de la variation dans le temps de la pression atmosphérique locale.

A cet effet, la présente invention concerne un objet portable équipé d'un dispositif de mesure de la pression atmosphérique, le dispositif de mesure de la pression atmosphérique comprenant un capteur de pression atmosphérique dont les dimensions géométriques varient en fonction des fluctuations de la pression atmosphérique, les variations de dimensions géométriques du capteur de pression atmosphérique étant appliquées à un dispositif d'affichage d'une tendance barométrique relié au capteur de pression atmosphérique via un mécanisme d'embrayage actionné par un utilisateur, le mécanisme d'embrayage pouvant être commuté entre une première position dans laquelle la liaison cinématique de type mécanique entre le capteur de pression atmosphérique et le dispositif d'affichage de la tendance barométrique est interrompue, et une seconde position dans laquelle le dispositif d'affichage de la tendance barométrique est couplé cinématiquement avec le capteur de pression atmosphérique.

Grâce à ces caractéristiques, la présente invention procure un objet portable équipé d'un dispositif de mesure de la pression atmosphérique grâce auquel il est possible d'afficher une tendance météorologique indiquant à l'utilisateur soit un temps stable, soit un temps allant en se dégradant (conditions dépressionnaires), soit un temps allant vers une amélioration (conditions anticycloniques). En couplant durant un laps de temps suffisant pour que la mesure de la variation de la pression atmosphérique soit significative le dispositif d'affichage de la tendance barométrique avec le capteur de pression atmosphérique, l'utilisateur connaît ainsi la tendance météorologique. Par ailleurs, lorsque l'utilisateur se déplace et que l'altitude à laquelle il se trouve varie, il a la possibilité de découpler le dispositif d'affichage de la tendance barométrique du dispositif de mesure de la pression atmosphérique de façon que le dispositif d'affichage de la tendance barométrique ne fournisse pas des indications erratiques. Dans un mode perfectionné de réalisation de l'invention décrit ci-dessous, il est aussi possible de corriger l'indication d'altitude en fonction des variations de la pression atmosphérique enregistrées. Bien entendu, pour que la mesure de la variation de la pression atmosphérique ait un sens, cette mesure doit être effectuée sans que l'utilisateur ne change de lieu. Dans le cas contraire, l'altitude du lieu où se trouve l'utilisateur peut varier, ce qui induit des variations de la pression atmosphérique qui faussent la détermination de la tendance météorologique.

Selon une caractéristique complémentaire de l'invention, le dispositif d'affichage de la tendance barométrique comprend une came d'affichage. La came d'affichage est soit une came en colimaçon, soit une came présentant un profil de rayon intermédiaire encadré par un profil de rayon inférieur et un profil de rayon supérieur.

Selon encore une autre caractéristique de l'invention, le mécanisme d'embrayage comprend une roue d'embrayage portée par une bascule d'embrayage, la bascule d'embrayage pouvant être actionnée par l'utilisateur entre une première position dans laquelle la roue d'embrayage n'assure pas la liaison cinématique entre le capteur de pression atmosphérique et le dispositif d'affichage de la tendance barométrique, et une seconde position dans laquelle la roue d'embrayage assure la liaison cinématique entre le capteur de pression atmosphérique et le dispositif d'affichage de la tendance barométrique.

Selon un mode particulier de réalisation de l'invention, un dispositif d'affichage de l'altitude est interposé entre le capteur de pression atmosphérique et le mécanisme d'embrayage, le dispositif d'affichage de l'altitude étant en prise permanente avec le capteur de pression atmosphérique et étant en prise temporaire avec le dispositif d'affichage de la tendance barométrique lorsque le mécanisme d'embrayage est activé.

Grâce à ces caractéristiques, la présente invention procure un objet portable capable de fournir en permanence une indication de l'altitude du lieu où se trouve l'utilisateur, et fournissant en outre sur demande de l'utilisateur une indication de la tendance météorologique qui permet de prévoir l'évolution du temps et de corriger, si nécessaire, l'indication de l'altitude. Un autre intérêt de ce mode de réalisation réside dans le fait qu'il permet de mettre à profit la présence d'un dispositif d'affichage de l'altitude préexistant dans l'objet portable pour en dériver une information supplémentaire relative à l'évolution de la tendance météorologique.

D'autres caractéristiques et avantages de la présente invention ressortiront plus clairement de la description détaillée qui suit d'un mode de réalisation de l'objet portable selon l'invention, cet exemple étant donné à titre purement illustratif et non limitatif seulement, en liaison avec le dessin annexé sur lequel :
- la figure 1 est une représentation schématique d'un dispositif d'affichage de l'altitude au moyen d'un capteur de pression atmosphérique ;
- la figure 2 est une représentation schématique d'un premier mode de réalisation d'un dispositif d'affichage d'une tendance barométrique relié à un capteur de pression atmosphérique via un mécanisme d'embrayage selon l'invention ;
- la figure 3 est une représentation schématique d'une variante de réalisation du dispositif d'affichage de la tendance barométrique illustré à la figure 2 avec intégration de la fonction d'affichage de l'altitude ;
- la figure 4 est une représentation schématique d'un second mode de réalisation d'un dispositif d'affichage d'une tendance barométrique relié à un capteur de pression atmosphérique via un mécanisme d'embrayage selon l'invention ;
- la figure 5 est une représentation schématique d'une variante de réalisation du dispositif d'affichage de la tendance barométrique illustré à la figure 4 ;
- la figure 6 est une représentation schématique d'une came à profil en colimaçon également bien adaptée aux besoins de l'invention, et
- la figure 7 est une représentation schématique d'un dispositif d'affichage de l'altitude qui ne fait pas partie de l'invention revendiquée et qui comprend un capteur de pression électronique fournissant à un moteur électrique des signaux de commande représentatifs des variations de la pression atmosphérique mesurées.

La présente invention procède de l'idée générale inventive qui consiste à équiper un objet portable muni d'un dispositif de mesure de la pression atmosphérique d'un mécanisme d'embrayage permettant de coupler, à la demande de l'utilisateur, le dispositif de mesure de la pression atmosphérique avec un dispositif d'affichage des variations de la pression atmosphérique. Moyennant un temps d'intégration suffisant, il est possible de déduire de la mesure des variations de la pression atmosphérique une indication sur la tendance météorologique (temps stable, situation dépressionnaire en cas de baisse de la pression atmosphérique ou situation anticyclonique en cas d'augmentation du champs de pressions). Selon un mode particulier de réalisation de l'invention, il est prévu de mettre à profit la présence du capteur de pression que l'on trouve classiquement dans des dispositifs altimétriques pour, en outre, fournir une indication sur la tendance météorologique. Cela permet à l'utilisateur de prévoir l'évolution de la météo et, le cas échéant, de corriger l'indication de l'altitude si celle-ci a été modifiée en raison de la fluctuation de la pression atmosphérique.

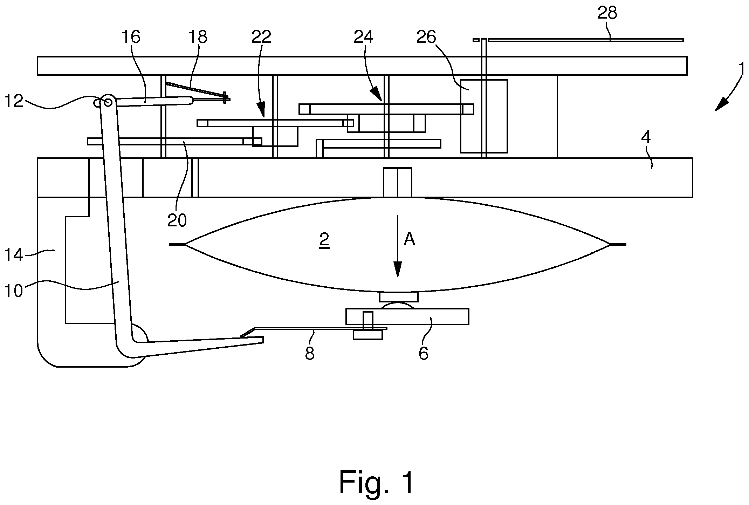

On a représenté sur la figure 1 un mécanisme de mesure de la pression atmosphérique. Désigné dans son ensemble par la référence numérique générale 1, ce mécanisme comprend un capteur de pression mécanique 2 par exemple du type anéroïde dont les dimensions géométriques varient en fonction des fluctuations de la pression atmosphérique. Le capteur de pression 2, disposé sous une platine 4 qui s'étend parallèlement à un cadran de la montre (non représenté), se déforme selon une direction perpendiculaire à la platine 4 matérialisée par la flèche A sur la figure 1. Les déformations géométriques du capteur de pression 2 provoquent le déplacement concomitant selon la même direction A d'un palpeur 6 relié, si nécessaire, par un prolongateur 8 à une bascule 10 montée pivotante autour d'un axe 12 sur un support 14. Le déplacement linéaire du palpeur 6 provoque le pivotement de la bascule 10 qui, via une bielle 16 et un levier 18, entraîne à son tour en rotation un train d'engrenages comprenant, à titre d'exemple illustratif et non limitatif, une roue 20 et un premier et un second mobiles multiplicateurs 22 et 24. Le second mobile multiplicateur 24 engrène avec un pignon d'affichage 26 qui porte une première aiguille 28 d'affichage d'une grandeur liée à la pression atmosphérique. La grandeur dérivée de la mesure de la pression atmosphérique peut être l'altitude du lieu où se trouve l'utilisateur, ou bien encore la tendance barométrique comme on va maintenant le voir.

La présente invention va être décrite en liaison avec une montre-bracelet. Il va de soi que cet exemple est donné à titre purement illustratif et non limitatif seulement et que le dispositif d'affichage de la tendance barométrique selon l'invention peut être intégré dans tout type d'objet portable comprenant un capteur de pression atmosphérique.

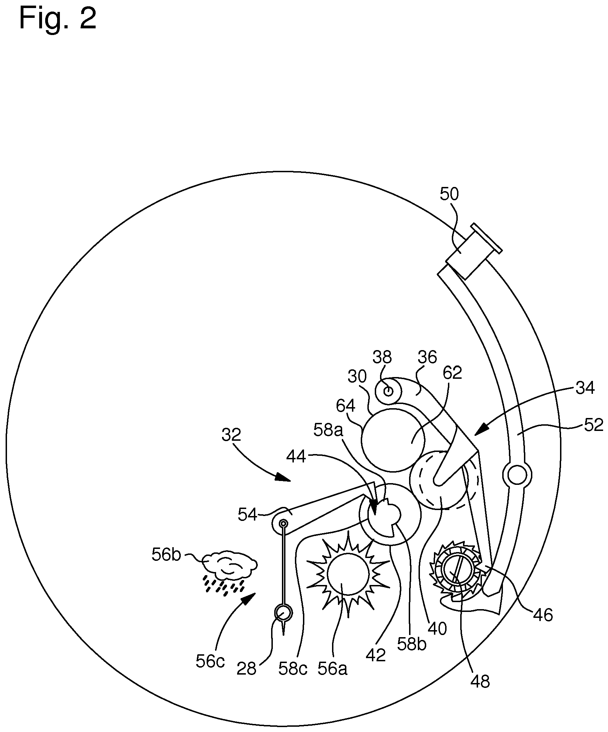

Dans un mode de réalisation simplifié, l'objet portable selon l'invention n'affiche qu'une tendance barométrique dérivée de la mesure de la pression atmosphérique et permettant de déduire une indication sur la tendance météorologique (temps stable, situation dépressionnaire en cas de baisse de la pression atmosphérique ou situation anticyclonique en cas d'augmentation du champs de pressions) à l'endroit où se trouve l'utilisateur. Selon les besoins de la construction, l'un quelconque des mobiles 20, 22, 24 ou 26 du train d'engrenages reliant la bascule 10 à la première aiguille 28 d'affichage de la grandeur liée à la pression atmosphérique peut être utilisé comme sortie 30 du mécanisme 1 de mesure de la pression atmosphérique et servir de prise de force au dispositif d'affichage d'une tendance barométrique selon l'invention dont un premier mode de réalisation va maintenant être décrit en liaison avec la figure 2.

Désigné dans son ensemble par la référence numérique générale 32, le dispositif d'affichage de la tendance barométrique selon l'invention est relié à la sortie 30 du mécanisme 1 de mesure de la pression atmosphérique via un mécanisme d'embrayage 34 pouvant être actionné par un utilisateur.

Le mécanisme d'embrayage 34 peut être commuté à la demande de l'utilisateur entre une première position (représentée en traits interrompus à la figure 2) dans laquelle la liaison cinématique entre le mécanisme 1 de mesure de la pression atmosphérique et le dispositif d'affichage 32 de la tendance barométrique est interrompue, et une seconde position (représentée en traits pleins à la figure 2) dans laquelle le dispositif d'affichage 32 de la tendance barométrique est couplé cinématiquement avec le mécanisme 1 de mesure de la pression atmosphérique.

Selon une forme d'exécution donnée à titre d'exemple illustratif seulement, le mécanisme d'embrayage 34 comprend une bascule d'embrayage 36 montée pivotante autour d'un axe 38 et portant une roue d'embrayage 40. En fonction de la position de la bascule d'embrayage 36, la roue d'embrayage 40 est capable de relier cinématiquement la sortie 30 du mécanisme 1 de mesure de la pression atmosphérique avec une roue 42 d'affichage de la tendance barométrique à laquelle est liée, directement ou par un train d'engrenages, une première came 44 d'affichage de la tendance barométrique qui sera décrite en détail ci-dessous. Pour pouvoir commuter le mécanisme d'embrayage 34 entre ses première et seconde positions, la bascule d'embrayage 36 est munie d'un bec 46 par lequel elle vient en appui sur une roue à colonnes 48 dont l'avance est commandée par l'utilisateur via un bouton-poussoir 50 et une bascule de commande 52.

Dans l'exemple illustré à la figure 2, le profil de la première came 44 d'affichage de la tendance barométrique est suivi par un premier bras palpeur 54 qui porte une première aiguille 28 d'affichage de la tendance barométrique. Cette première aiguille 28 se déplace en regard de deux symboles 56a et 56b qui indiquent pour l'un une situation anticyclonique, et pour l'autre une situation dépressionnaire. La zone entre les deux symboles 56a et 56b est séparée par une zone intermédiaire 56c qui indique un temps stable. Afin de pouvoir commander convenablement le déplacement de la première aiguille 28, la première came 44 présente un profil de rayon intermédiaire 58a correspondant au temps stable et qui est encadré par un profil de rayon inférieur 58b correspondant à la situation dépressionnaire et par un profil de rayon supérieur 58c correspondant à la situation anticyclonique.

Le fonctionnement du dispositif d'affichage de la tendance barométrique selon l'invention est le suivant. En appuyant sur le bouton-poussoir 50, l'utilisateur couple cinématiquement le mécanisme 1 de mesure de la pression atmosphérique avec le dispositif 32 d'affichage de la tendance barométrique. Sous l'effet des variations de la pression atmosphérique mesurée, le capteur de pression 2 se déforme géométriquement, ce qui provoque le pivotement concomitant de la première came 44 d'affichage de la tendance barométrique. On comprendra que le rapport d'engrenage entre le capteur de pression 2 et la première came 44 est adapté pour permettre une rotation de la première came 44 qui intègre les fluctuations de la pression atmosphérique sur un intervalle de temps suffisamment long pour obtenir une mesure significative. Bien entendu, pour que la mesure ait un sens, l'utilisateur doit demeurer le temps de la mesure au même endroit.

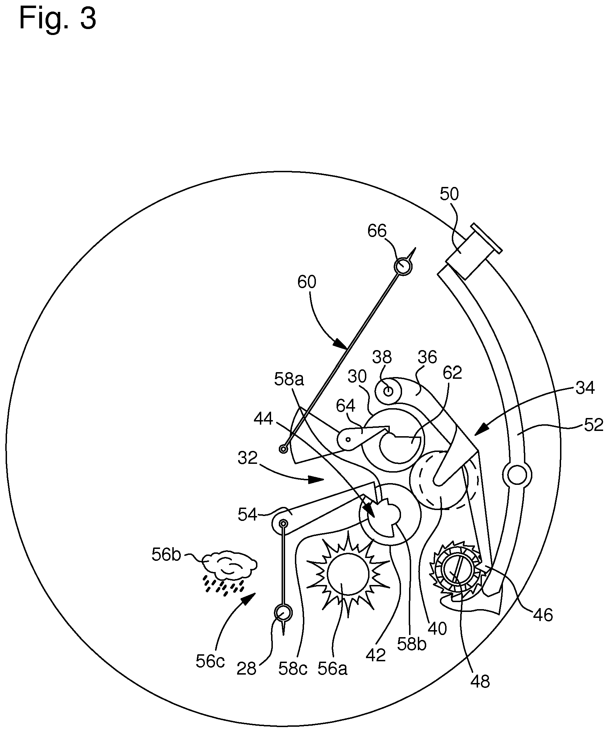

Selon une variante de réalisation de l'invention illustrée à la figure 3, on met à profit la présence du mécanisme 1 de mesure de la pression atmosphérique pour fournir en outre une indication de l'altitude du lieu où se trouve l'utilisateur. A cet effet, la sortie 30 du mécanisme 1 de mesure de la pression atmosphérique est reliée, directement ou par l'intermédiaire d'un train d'engrenages, à un dispositif 60 d'affichage de l'altitude via une seconde came 62. Le profil de cette seconde came 62 représente la variation de l'altitude en fonction de la pression atmosphérique mesurée et est suivi par un second bras palpeur 64 qui porte une seconde aiguille 66 indiquant l'altitude. On notera que, conformément à ce mode de réalisation, la valeur de l'altitude dérivée de la mesure fournie par le mécanisme 1 de mesure de la pression atmosphérique peut être constamment affichée, que le dispositif 32 d'affichage de la tendance barométrique soit activé ou non par l'utilisateur.

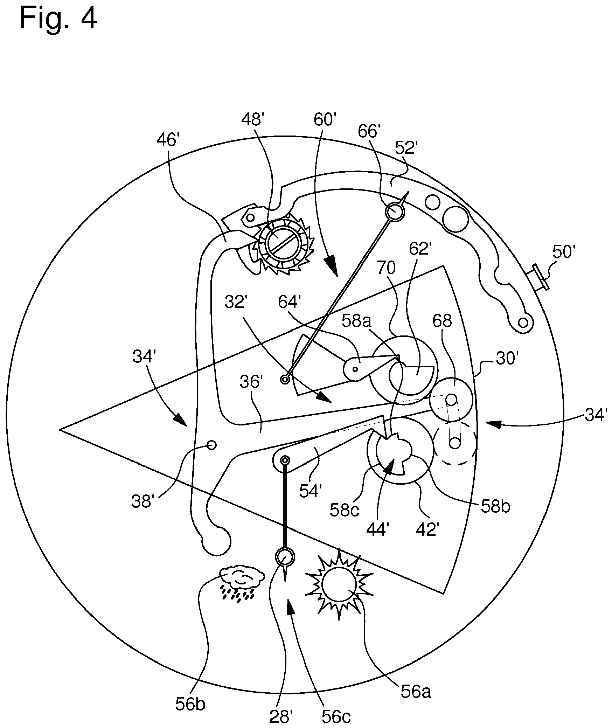

Selon un second mode de réalisation de l'invention illustré à la figure 4, la sortie 30' du mécanisme 1 de mesure de la pression atmosphérique se présente sous la forme d'un râteau et peut être reliée, via un mécanisme d'embrayage 34', soit à un dispositif 60' d'affichage de l'altitude, soit à un dispositif 32' d'affichage de la tendance barométrique.

Le mécanisme d'embrayage 34' peut être commuté à la demande de l'utilisateur entre une première position (représentée en traits pleins à la figure 4) dans laquelle le mécanisme d'embrayage 34' assure la liaison cinématique entre le râteau 30' de sortie du mécanisme 1 de mesure de la pression atmosphérique et le dispositif 60' d'affichage de l'altitude, et une seconde position (représentée en traits interrompus à la figure 4) dans laquelle le mécanisme d'embrayage 34' assure la liaison cinématique entre le râteau 30' et le dispositif 32' d'affichage de la tendance barométrique.

Selon une forme d'exécution donnée à titre d'exemple illustratif seulement, le mécanisme d'embrayage 34' comprend une bascule d'embrayage 36' montée pivotante autour d'un axe 38' et portant un pignon baladeur 68 en prise permanente avec le râteau 30'. En fonction de la position de la bascule d'embrayage 36', le pignon baladeur 68 est capable de relier cinématiquement le râteau 30' de sortie du mécanisme 1 de mesure de la pression atmosphérique soit avec une roue 42' d'affichage de la tendance barométrique, soit avec une roue 70 d'affichage de l'altitude. Pour pouvoir commuter le mécanisme d'embrayage 34' entre ses première et seconde positions, la bascule d'embrayage 36' est munie d'un bec 46' par lequel elle vient en appui sur une roue à colonnes 48' dont l'avance est commandée par l'utilisateur via un bouton-poussoir 50' et une bascule de commande 52'.

Une première came 44' d'affichage de la tendance barométrique est liée, directement ou par un train d'engrenages, à la roue 42' d'affichage de la tendance barométrique. Dans l'exemple illustré à la figure 4, le profil de la première came 44' d'affichage de la tendance barométrique est suivi par un premier bras palpeur 54' qui porte une première aiguille 28' d'affichage de la tendance barométrique. Cette première aiguille 28' se déplace en regard de deux symboles 56a et 56b qui indiquent pour l'un une situation anticyclonique, et pour l'autre une situation dépressionnaire. La zone entre les deux symboles 56a et 56b est séparée par une zone intermédiaire 56c qui indique un temps stable.

Afin de pouvoir commander convenablement le déplacement de la première aiguille 28', la première came 44' présente un profil de rayon intermédiaire 58a correspondant à un temps stable et qui est encadré par un profil de rayon inférieur 58b correspondant à une situation dépressionnaire et par un profil de rayon supérieur 58c correspondant à une situation anticyclonique.

Une seconde came 62' est liée directement ou par l'intermédiaire d'un train d'engrenages à la sortie 30' du mécanisme 1 de mesure de la pression atmosphérique. Le profil de cette seconde came 62' qui représente la variation de l'altitude en fonction de la pression atmosphérique mesurée est suivi par un second bras palpeur 64' qui porte une seconde aiguille 66' indiquant l'altitude.

On notera que, conformément à ce mode de réalisation, la valeur de l'altitude dérivée de la mesure fournie par le mécanisme 1 de mesure de la pression atmosphérique ne peut être fournie que lorsque le pignon baladeur 68 relie cinématiquement le râteau 30' de sortie du mécanisme 1 de mesure de la pression atmosphérique à la roue 70 d'affichage de l'altitude, et que la tendance barométrique ne peut être affichée que lorsque le pignon baladeur 68 relie cinématiquement le râteau 30' à la roue 42' d'affichage de la tendance barométrique. La mesure de l'altitude se fait a priori pendant la majorité du temps et est interrompue seulement durant les périodes où l'on mesure les variations de la pression atmosphérique, ces mesures de la pression atmosphérique devant être effectuées à altitude constante pour ne pas être faussées. Il est donc possible d'interrompre la mesure de l'altitude, par exemple le soir au coucher, et de commencer à mesurer les changements de pression atmosphérique, puis de reprendre la mesure de l'altitude par exemple au réveil, sans que la valeur affichée de l'altitude ne soit modifiée par les changements météorologiques survenus durant la nuit.

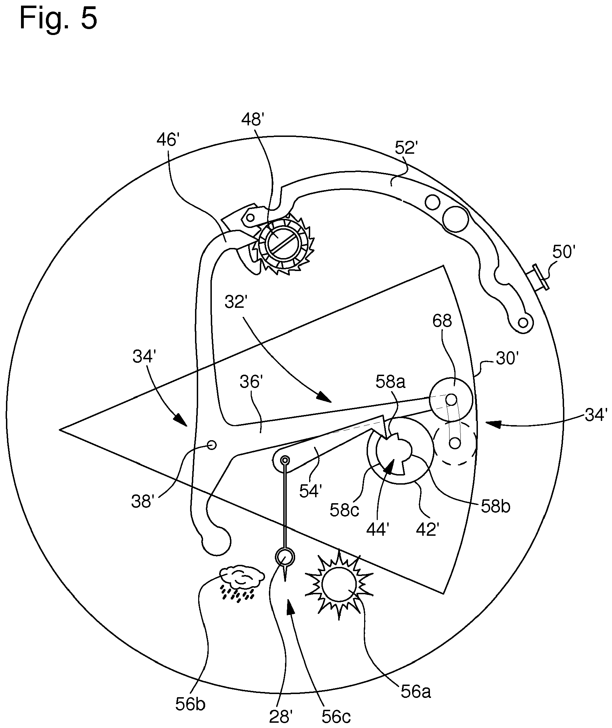

Selon une variante d'exécution simplifiée de l'invention illustrée à la figure 5, le dispositif 60' d'affichage de l'altitude est omis et seul subsiste le dispositif 32' d'affichage de la tendance barométrique.

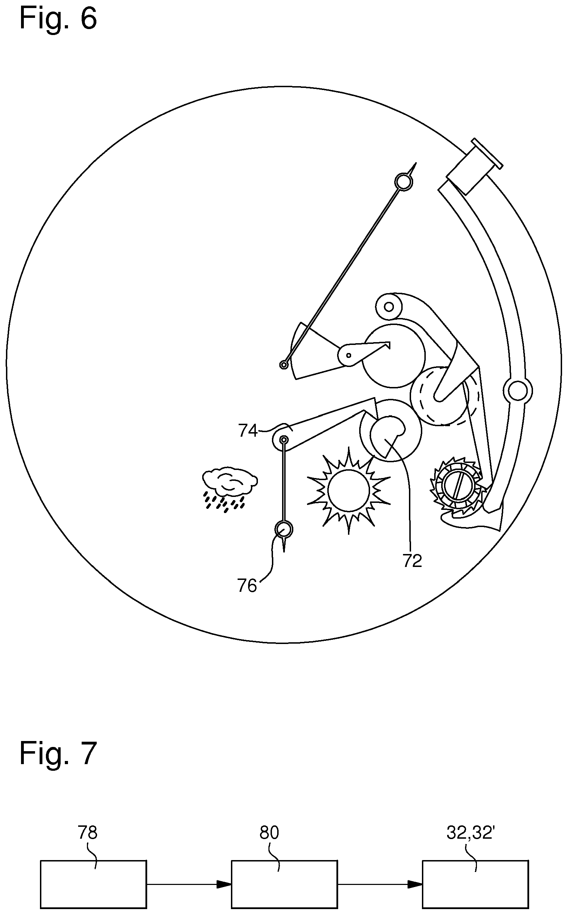

La figure 6 est une représentation schématique d'une came 72 à profil en colimaçon également bien adaptée aux besoins de l'invention. La came 72 peut remplacer la première came 40, 44' d'affichage de la tendance barométrique. A cette fin, le profil en colimaçon de la came 72 est calculé de façon que la coopération entre la came 72 et un bras palpeur 74 portant une aiguille 76 fournisse un affichage représentatif des fluctuations de la pression atmosphérique mesurées.

Il va de soi que la présente invention n'est pas limitée aux modes de réalisation qui viennent d'être décrits et que diverses modifications et variantes simples peuvent être envisagées par l'homme du métier sans sortir du cadre de l'invention tel que défini par les revendications annexées. Dans un mode de réalisation qui ne fait pas partie de l'invention revendiquée, on remplace le capteur de pression atmosphérique 2 de type mécanique par un capteur de pression atmosphérique 78 de type électronique fournissant à un moteur électrique 80 un signal de commande représentatif des variations de la pression atmosphérique mesurées comme illustré à la figure 7. La sortie du moteur électrique 80 sert de prise de force au dispositif d'affichage 32, 32' d'une tendance barométrique selon l'invention.

## Revendications

1. Objet portable équipé d'un mécanisme (1) de mesure de la pression atmosphérique, le mécanisme (1) de mesure de la pression atmosphérique comprenant un capteur de pression atmosphérique (2) dont les dimensions géométriques varient en fonction des fluctuations de la pression atmosphérique, les variations de dimensions géométriques du capteur de pression atmosphérique (2) étant appliquées à un dispositif (32 ; 32') d'affichage d'une tendance barométrique relié au capteur de pression atmosphérique (2) via un mécanisme d'embrayage (34 ; 34') actionné par un utilisateur, le mécanisme d'embrayage (34 ; 34') pouvant être commuté à la demande de l'utilisateur entre une première position dans laquelle la liaison cinématique de type mécanique entre le capteur de pression atmosphérique (2) et le dispositif (32 ; 32') d'affichage de la tendance barométrique est interrompue, et une seconde position dans laquelle le dispositif (32 ; 32') d'affichage de la tendance barométrique est couplé cinématiquement avec le capteur de pression atmosphérique (2).

2. Objet portable selon la revendication 1, **caractérisé en ce que** le dispositif (32 ; 32') d'affichage de la tendance barométrique comprend une première came (44 ; 44') d'affichage de la tendance barométrique.

3. Objet portable selon la revendication 2, **caractérisé en ce que** la première came (44 ; 44') d'affichage de la tendance barométrique présente un profil de rayon intermédiaire (58a) encadré par un profil de rayon inférieur (58b) et par un profil de rayon supérieur (58c).

4. Objet portable selon la revendication 2, **caractérisé en ce que** la première came d'affichage est une came (72) à profil en colimaçon.

5. Objet portable selon l'une quelconque des revendications 1 à 4, **caractérisé en ce que** le capteur de pression atmosphérique (2) est un capteur de pression mécanique.

6. Objet portable selon la revendication 5, **caractérisé en ce que** le capteur de pression atmosphérique (2) est de type anéroïde.

7. Objet portable selon la revendication 6, **caractérisé en ce que**, pour pouvoir commuter le mécanisme d'embrayage (34) entre ses première et seconde positions, la bascule d'embrayage (36) est munie d'un bec (46) par lequel elle vient en appui sur une roue à colonnes (48) dont l'avance est commandée par l'utilisateur via un bouton-poussoir (50) et une bascule de commande (52).

8. Objet portable selon l'une quelconque des revendications 2 à 6, **caractérisé en ce qu'**un dispositif (60) d'affichage de l'altitude est interposé entre le capteur de pression atmosphérique (2) et le mécanisme d'embrayage (34), le dispositif (60) d'affichage de l'altitude étant en prise permanente avec le capteur de pression atmosphérique (2) et étant en prise temporaire avec le dispositif (32) d'affichage de la tendance barométrique lorsque le mécanisme d'embrayage (34) est activé.

9. Objet portable selon la revendication 8, **caractérisé en ce que** le dispositif (60) d'affichage de l'altitude comprend une seconde came (62) dont le profil représente la variation de l'altitude en fonction de la pression atmosphérique et est suivi par un second bras palpeur (64) qui porte une seconde aiguille (66) indiquant l'altitude.

10. Objet portable selon l'une quelconque des revendications 2 à 6, **caractérisé en ce que** le mécanisme d'embrayage (34') peut être commuté à la demande de l'utilisateur entre une première position dans laquelle le mécanisme d'embrayage (34') est seulement en prise avec le capteur de pression atmosphérique (2), et une seconde position dans laquelle le mécanisme d'embrayage (34') assure la liaison cinématique entre le capteur de pression atmosphérique (2) et le dispositif (32') d'affichage de la tendance barométrique.

11. Objet portable selon la revendication 10, **caractérisé en ce que** le mécanisme d'embrayage (34') comprend un pignon baladeur (68) porté par une bascule d'embrayage (36'), la bascule d'embrayage (36') pouvant être actionnée par l'utilisateur entre une première position dans laquelle le pignon baladeur (68) n'est en prise qu'avec le capteur de pression atmosphérique (2), et une seconde position dans laquelle le pignon baladeur (68) assure la liaison cinématique entre le capteur de pression atmosphérique (2) et une roue (42') d'affichage de la tendance barométrique à laquelle est liée la première came (44') d'affichage de la tendance barométrique.

12. Objet portable selon la revendication 11, **caractérisé en ce que**, pour pouvoir commuter le mécanisme d'embrayage (34') entre ses première et seconde positions, la bascule d'embrayage (36') est munie d'un bec (46') par lequel elle vient en appui sur une roue à colonnes (48') dont l'avance est commandée par l'utilisateur via un bouton-poussoir (50') et une bascule de commande (52').

13. Objet portable selon l'une quelconque des revendications 10 à 12, **caractérisé en ce que**, dans sa première position, le mécanisme d'embrayage (34') assure la liaison cinématique entre le capteur de pression atmosphérique (2) et un dispositif d'affichage de l'altitude (60').

14. Objet portable selon la revendication 13, **caractérisé en ce qu'**une seconde came (62') est liée au capteur (2) de mesure de la pression atmosphérique, le profil de cette seconde came (62') qui représente la variation de l'altitude en fonction de la pression atmosphérique étant suivi par un second bras palpeur (64') qui porte une seconde aiguille (66') indiquant l'altitude.

## Patentansprüche

1. Tragbarer Gegenstand, der mit einem Mechanismus (1) zum Messen des Atmosphärendrucks ausgestattet ist, wobei der Mechanismus (1) zum Messen des Atmosphärendrucks einen Atmosphärendrucksensor (2) umfasst, dessen geometrische Abmessungen sich abhängig von Schwankungen des Atmosphärendrucks ändern, wobei die Änderungen der geometrischen Abmessungen des Atmosphärendrucksensors (2) in eine Vorrichtung (32; 32') zum Anzeigen einer barometrischen Tendenz eingegeben werden, die mit dem Atmosphärendrucksensor (2) über einen von einem Benutzer betätigten Kupplungsmechanismus (34; 34') verbunden ist, wobei der Kupplungsmechanismus (34; 34') auf Anforderung des Benutzers umschaltbar ist zwischen einer ersten Position, in der die kinematische Verbindung des mechanischen Typs zwischen dem Atmosphärendrucksensor (2) und der Vorrichtung (32; 32') zum Anzeigen der barometrischen Tendenz unterbrochen ist, und einer zweiten Position, in der die Vorrichtung (32; 32') zum Anzeigen der barometrischen Tendenz mit dem Atmosphärendrucksensor (2) kinematisch gekoppelt ist.

2. Tragbarer Gegenstand nach Anspruch 1, **dadurch gekennzeichnet, dass** die Vorrichtung (32; 32') zum Anzeigen der barometrischen Tendenz einen ersten Nocken (44; 44') zum Anzeigen der barometrischen Tendenz umfasst.

3. Tragbarer Gegenstand nach Anspruch 2, **dadurch gekennzeichnet, dass** der erste Nocken (44; 44') zum Anzeigen der barometrischen Tendenz ein Zwischenradiusprofil (58a) aufweist, das von einem kleineren Radiusprofil (58b) und von einem größeren Radiusprofil (58c) umgeben ist.

4. Tragbarer Gegenstand nach Anspruch 2, **dadurch gekennzeichnet, dass** der erste Anzeigenocken ein Nocken (72) mit spiralförmigem Profil ist.

5. Tragbarer Gegenstand nach einem der Ansprüche 1 bis 4, **dadurch gekennzeichnet, dass** der Atmosphärendrucksensor (2) ein mechanischer Drucksensor ist.

6. Tragbarer Gegenstand nach Anspruch 5, **dadurch gekennzeichnet, dass** der Atmosphärendrucksensor (2) vom Aneroid-Typ ist.

7. Tragbarer Gegenstand nach Anspruch 6, **dadurch gekennzeichnet, dass**, um den Kupplungsmechanismus (34) zwischen seiner ersten und seiner zweiten Position umschalten zu können, die Kupplungswippe (36) mit einer Spitze (46) versehen ist, über die sie sich an einem Säulenrad (48) abstützt, dessen Vorwärtsbewegung durch den Anwender über einen Drückerknopf (50) und eine Steuerwippe (52) gesteuert wird.

8. Tragbarer Gegenstand nach einem der Ansprüche 2 bis 6, **dadurch gekennzeichnet, dass** zwischen den Atmosphärendrucksensor (2) und den Kupplungsmechanismus (34) eine Vorrichtung (60) zum Anzeigen der Höhe eingefügt ist, wobei die Höhenanzeigevorrichtung (60) ständig mit dem Atmosphärendrucksensor (2) in Eingriff steht und mit der Vorrichtung (32) zum Anzeigen der barometrischen Tendenz vorübergehend in Eingriff steht, wenn der Kupplungsmechanismus (34) aktiviert ist.

9. Tragbarer Gegenstand nach Anspruch 8, **dadurch gekennzeichnet, dass** die Vorrichtung (60) zum Anzeigen der Höhe einen zweiten Nocken (62) umfasst, dessen Profil die Veränderung der Höhe in Abhängigkeit vom Atmosphärendruck repräsentiert und dem ein zweiter Tasterarm (64) folgt, der einen zweiten Zeiger (66) trägt, der die Höhe angibt.

10. Tragbarer Gegenstand nach einem der Ansprüche 2 bis 6, **dadurch gekennzeichnet, dass** der Kupplungsmechanismus (34') auf Anforderung des Benutzers umschaltbar ist zwischen einer ersten Position, in der der Kupplungsmechanismus (34') nur mit dem Atmosphärendrucksensor (2) in Eingriff steht, und einer zweiten Position, in der der Kupplungsmechanismus (34') die kinematische Verbindung zwischen dem Atmosphärendrucksensor (2) und der Vorrichtung (32') zum Anzeigen der barometrischen Tendenz sicherstellt.

11. Tragbarer Gegenstand nach Anspruch 10, **dadurch gekennzeichnet, dass** der Kupplungsmechanismus (34') einen von einer Kupplungswippe (36') getragenen Kupplungstrieb (68) umfasst, wobei die Kupplungswippe (36') durch den Benutzer schaltbar ist zwischen einer ersten Position, in der der Kupplungstrieb (68) nur mit dem Atmosphärendrucksensor (2) in Eingriff steht, und einer zweiten Position, in der der Kupplungstrieb (68) die kinematische Verbindung zwischen dem Atmosphärendrucksensor (2) und einem Rad (42') zum Anzeigen der barometrischen Tendenz sicherstellt, mit dem der erste Nocken (44') zum Anzeigen der barometrischen Tendenz verbunden ist.

12. Tragbarer Gegenstand nach Anspruch 11, **dadurch gekennzeichnet, dass**, um den Kupplungsmechanismus (34') zwischen seiner ersten und seiner zweiten Position umschalten zu können, die Kupplungswippe (36') mit einer Spitze (46') versehen ist, über die sie sich an einem Säulenrad (48') abstützt, dessen Vorwärtsbewegung durch den Benutzer über einen Drückerknopf (50') und eine Steuerwippe (52') gesteuert wird.

13. Tragbarer Gegenstand nach einem der Ansprüche 10 bis 12, **dadurch gekennzeichnet, dass** der Kupplungsmechanismus (34') in seiner ersten Position die kinematische Verbindung zwischen dem Atmosphärendrucksensor (2) und einer Höhenanzeigevorrichtung (60') sicherstellt.

14. Tragbarer Gegenstand nach Anspruch 13, **dadurch gekennzeichnet, dass** ein zweiter Nocken (62') mit dem Sensor (2) zum Messen des Atmosphärendrucks verbunden ist, wobei dem Profil dieses zweiten Nockens (62'), das die Veränderung der Höhe in Abhängigkeit vom Atmosphärendruck repräsentiert, ein zweiter Tasterarm (64') folgt, der einen die Höhe angebenden zweiten Zeiger (66') trägt.

## Claims

1. Portable object provided with a mechanism (1) for measuring atmospheric pressure, the atmospheric pressure measuring mechanism (1) including an atmospheric pressure sensor (2) whose geometric dimensions vary with atmospheric pressure fluctuations, the variations in the geometric dimensions of the atmospheric pressure sensor (2) being applied to a device (32; 32') displaying a barometric tendency connected to the atmospheric pressure sensor (2) via a coupling mechanism (34; 34') actuated by a user, the coupling mechanism (34, 34') being capable of being switched on demand of a user between a first position, in which the kinematic connection of the mechanical type between the atmospheric pressure sensor (2) and the barometric tendency display device (32; 32') is interrupted, and a second position in which the barometric tendency display device (32; 32') is kinematically coupled to the atmospheric pressure sensor (2).

2. Portable object according to claim 1, **characterized in that** the barometric tendency display device (32; 32') includes a first barometric tendency display cam (44; 44').

3. Portable object according to claim 2, **characterized in that** the first barometric tendency display cam (44; 44') has a profile of intermediate radius (58a) framed by a profile of smaller radius (58b) and by a profile of greater radius (58c).

4. Portable object according to claim 2, **characterized in that** the first display cam is a cam with a snail profile (72).

5. Portable object according to any of claims 1 to 4, **characterized in that** the atmospheric pressure sensor (2) is a mechanical pressure sensor.

6. Portable object according to claim 5, **characterized in that** the atmospheric pressure sensor (2) is an aneroid type sensor.

7. Portable object according to claim 6, **characterized in that**, to be able to switch the coupling mechanism (34) between the first and second positions, the coupling lever (36) is provided with a beak (46) via which said lever bears on a column wheel (48) whose movement is controlled by the user via a push button (50) and a control lever (52).

8. Portable object according to any of claims 2 to 6, **characterized in that** an altitude display device (60) is inserted between the atmospheric pressure sensor (2) and the coupling mechanism (34), the altitude display device (60) being permanently meshed with the atmospheric pressure sensor (2) and being temporarily meshed with the barometric tendency display device (32) when the coupling mechanism (34) is actuated.

9. Portable object according to claim 8, **characterized in that** the altitude display device (60) includes a second cam (62) whose profile represents altitude variation with atmospheric pressure and is followed by a second feeler arm (64) which carries a second altitude indicator hand (66).

10. Portable object according to any of claims 2 to 6, **characterized in that** the coupling mechanism (34') can be switched on demand of the user between a first position in which the coupling mechanism (34') is only meshed with the atmospheric pressure sensor (2), and a second position in which the coupling mechanism (34') provides the kinematic connection between the atmospheric pressure sensor (2) and the barometric tendency display device (32').

11. Portable object according to claim 10, **characterized in that** the coupling mechanism (34') includes a sliding pinion (68) carried by a coupling lever (36'), the coupling lever (36') being capable of actuation by the user between a first position in which the sliding pinion (68) is only meshed with the atmospheric pressure sensor (2), and a second position in which the sliding pinion (68) provides the kinematic connection between the atmospheric pressure sensor (2) and a barometric tendency display wheel (42') to which the first barometric display cam (44') is connected.

12. Portable object according to claim 11, **characterized in that**, to be able to switch the coupling mechanism (34') between the first and second positions, the coupling lever (36') is provided with a beak (46') via which said lever bears on a column wheel (48') whose movement is controlled by the user via a push button (50') and a control lever (52').

13. Portable object according to any of claims 10 to 12, **characterized in that**, in the first position thereof, the coupling mechanism (34') provides the kinematic connection between the atmospheric pressure sensor (2) and an altitude display device (60').

14. Portable object according to claim 13, **characterized in that** a second cam (62') is connected to the atmospheric pressure measuring sensor (2), the profile of said second cam (62'), which represents the variation in altitude with atmospheric pressure, being followed by a second feeler arm (64') which carries a second altitude indicator hand (66').
